# EUROPÄISCHE PATENTSCHRIFT

(11) **EP 3 717 892 B1**
(45) Veröffentlichungstag und Bekanntmachung des Hinweises auf die Patenterteilung: **29.06.2022**
(21) Anmeldenummer: 18796919.1
(22) Anmeldetag: 01.11.2018
(51) Int. Cl.: G01N 21/67, H01T 15/00, G01J 3/443

(54) **FUNKENEMISSIONSSPEKTROMETER UND VERFAHREN ZUM BETRIEB DESSELBEN**
SPARK EMISSION SPECTROMETER AND METHOD FOR OPERATING SAME
SPECTROMÈTRE D'ÉMISSION D'ÉTINCELLES ET PROCÉDÉ POUR LE FAIRE FONCTIONNER

(30) Priorität: 30.11.2017 DE 102017128469
(43) Veröffentlichungstag der Anmeldung: 07.10.2020
(73) Patentinhaber: Elementar Analysensysteme GmbH, 63505 Langenselbold (DE)
(72) Erfinder: DOMINICK, Hans, 47533 Kleve (DE); MOLDERINGS, Michael, 47647 Kerken (DE)
(74) Vertreter: Keil & Schaafhausen Patentanwälte PartGmbB
(86) Internationale Anmeldenummer: PCT/EP2018/079939
(87) Internationale Veröffentlichungsnummer: WO 2019/105678

(56) Entgegenhaltungen:
- EP-A2- 0 398 462
- WO-A1-2012/028484
- DE-A1- 4 008 348
- DE-A1-102015 002 104

## Beschreibung

Die vorliegende Erfindung betrifft ein optisches Emissionsspektrometer und ein Verfahren zum Betrieb eines solchen optischen Emissionsspektrometers mit wenigstens einer Funkenkammer, welche eine in ihrem Inneren angeordnete längliche Elektrode und wenigstens einen Einlass für ein Inertgas aufweist, wobei der Einlass so angeordnet ist, dass das Inertgas die Elektrode entlang ihrer Längsachse umströmt.

Ein Emissionsspektrum ist das elektromagnetische Spektrum, das von Atomen, Molekülen oder Materialien ausgestrahlt wird, ohne dass elektromagnetische Strahlung gleicher Frequenz eingestrahlt wird. Während das Emissionsspektrum von Atomen, Molekülen oder verdünnter Gase ein Linienspektrum ergibt, emittieren heiße Festkörper und Flüssigkeiten ein kontinuierliches Spektrum, weil die einzelnen Atome zusätzlich miteinander wechselwirken und somit die diskreten Quantenzustände ineinander übergehen.

Zur Gruppe der optischen Emissionsspektrometrie gehört die Funkenemissionsspektrometrie. Diese wird beispielsweise zur Identifizierung von Metalllegierungen eingesetzt. Hierbei werden zunächst Atome oder Ionen durch Zuführung von Energie aus dem energetischen Grundzustand auf ein energetisch höher liegendes Niveau gebracht. Unter spontaner Emission von Strahlung (Energie) fallen sie in den energetischen Grundzustand zurück. Da auf der einen Seite die Energiedifferenzen bzw. über das Plancksche Strahlungsgesetz die Wellenlängen elementspezifisch sind und somit jedes Element sein charakteristisches Linienspektrum besitzt, und auf der anderen Seite die Intensität der Strahlung proportional der Anzahl der vorhandenen Atome oder Ionen ist, sind sowohl qualitative als auch quantitative Aussagen über die Zusammensetzung von Proben möglich.

Die notwendige Energie, um zunächst einen Teil der Probe zu verdampfen, zu dissoziieren bzw. zu ionisieren und schließlich anzuregen, wird im Fall der Funkenemissionsspektrometrie in der Regel durch eine unipolare Mittelspannungsfunkenentladung bei Funkenfolgefrequenzen von bis zu 1000 Hz zur Verfügung gestellt. Diese findet meist zwischen zwei Elektroden statt, von denen eine aus der zu analysierenden Probe besteht und als Kathode geschaltet ist. Die Probe selbst muss hierzu elektrisch leitend oder als Pulver mit einem elektrisch leitenden Material (z. B. Graphit) vermischt und verpresst sein.

Der Abfunkprozess besteht aus mehreren Stufen: Zunächst wird die Funkenkammer, also der Bereich zwischen der Elektrode der Probe, einige Sekunden mit Argon gespült, um die gesamte Umgebungsluft auszutreiben. Es folgt die sogenannte Vorfunkzeit, bei der mehrere Tausend Einzelfunkenentladungen dazu verwendet werden, einen Teil der Probenoberfläche umzuschmelzen und somit zu homogenisieren. Hierdurch können Gefügeeinflüsse beseitigt und Einschlüsse z. T. aufgelöst werden.

Optimal für die Analytik ist es, wenn die Vorfunkzeit im stationären Abfunkzustand endet, also zu einem Zeitpunkt, bei dem die Probenoberfläche soweit homogenisiert wurde, dass sich die gemessenen Intensitäten der Analysenlinien zeitlich nicht mehr ändern. Es schließt sich nach der Vorfunk- die Integrationszeit an, in der bei klassischen Funkenemissionsspektrometern die Intensitäten von mehreren Tausend Einzelfunken mit photosensitiven Sensoren, insbesondere CMOS Sensoren oder Photomultipliern (PMT) gemessen und anschließend integriert werden, was schließlich über eine Kalibrierung zu der Ausgabe von Massenanteilen führt.

Die DE 40 08 348 A1 befasst sich mit Messfehlern aufgrund von Verlusteffekt, beispielsweise durch Diffusion. Für das konkrete Verfahren zur Messung von Aerosolparametern wird ein Aerosol in einer Schutzgashülle im axialen Zentrum einer Rohrströmung geführt und so eine Wandberührung der Partikel ausgeschlossen.

Grundsätzlich beschreibt beispielsweise die DE 10 2015 002 104 A1 ein Funkenemissionsspektrometer, wobei der Schwerpunkt auf einem Anregungsgenerator mit verbessertem elektrischen Wirkungsgrad liegt.

Die EP 0 398 462 A2 beschreibt ebenfalls ein Verfahren und eine Vorrichtung für die optische Funkenemissionsspektrometrie. Ziel der hier beschriebenen Erfindung ist eine Vereinfachung der Reinigung der Abfunkkammer, wodurch gegebenenfalls auch der Schutzgasbedarf gesenkt werden kann. Auf den Schutzgasverbrauch oder den Einfluss der Schutzgasströmung wird nicht näher eingegangen.

Die WO 2012/028484 A1 hingegen schlägt eine Spülung mit Schutzgas vor, welche orthogonal zur Längsachse der länglichen, den Funken erzeugenden Elektrode gerichtet ist.

Problematisch ist daran, dass es durch die orthogonale Anströmung der Elektrode trotz deren sehr spezieller Ausrichtung zu Turbulenzen kommt, die wiederum dazu führen, dass das Plasma nicht sicher von Schutzgas ummantelt wird. Weiterhin befasst sich die WO 2012/028484 A1 nicht mit unebenen Probenflächen, wie beispielsweise den Oberflächen von Rohren, die aufgrund der orthogonalen Strömungsrichtung ebenfalls ungleichmäßiger angeströmt werden würden, wodurch kein homogener Brennfleck und damit ein verlässliches Messergebnis erzielt werden kann.

Es ist daher Aufgabe der vorliegenden Erfindung, eine Vorrichtung und das zugehörige Betriebsverfahren bereitzustellen, bei dem der Schutzgasverbrauch eines Funkenspektrometers unabhängig von der Oberflächenbeschaffenheit der verwendeten Probe deutlich abgesenkt ist.

Dies wird durch eine Vorrichtung mit den Merkmalen des Anspruchs 1 erreicht.

Eine solche Vorrichtung weist eine Funkenkammer auf, in welcher eine längliche Elektrode, die als Anode genutzt wird, angeordnet ist. In die Funkenkammer münden ein Gaseinlass und ein Gasauslass, wobei die beiden in der Längsachse der in der Funkenkammer vorgesehenen Elektrode angeordnet sind. Vorzugsweise die Längsachse der Elektrode genau in mit der Zentralachse der entstehenden Gasströmung zwischen Gaseintritt und Gasaustritt zusammen. Weiterhin weist die Funkenkammer vorzugsweise wenigstens ein Fenster auf, welches vorzugsweise orthogonal zur Längsachse der Elektrode angeordnet ist.

Entscheidend für die Erfindung ist, dass entweder im Gaseintritt und/oder zwischen Gaseintritt und Elektrode wenigstens ein siebartiger Einsatz vorgesehen ist. Alternativ oder ergänzend kann auch die Elektrode im Strömungsquerschnitt der Inertgasströmung von wenigstens einem siebartigen Einsatz umgeben sein. Vorzugsweise sind zwei bis drei siebartige Einsätze vorgesehen, welche in günstiger Weise netzartig ausgestaltet sind. Durch diesen Einsatz strömt das Inertgas. Die makroskopische Ordnung dieser siebartigen Einsätze führt zu einer Homogenisierung der Strömung, wodurch sich trotz relativ hoher Strömungsgeschwindigkeiten zwischen 150 - 200 l/h eine laminare Strömung um die Elektrode herum ausbildet. Besonders bevorzugt bildet sich ein ringförmiger laminarer Inertgasstrom entlang dem an der Elektrode entstehenden Plasma aus. Somit kann durch das Inertgas die Elektrode gekühlt und gleichzeitig das Plasma geschützt werden.

In einer günstigen Ausgestaltung der Erfindung enthält der siebartige Einsatz wenigstens ein Metall und/oder ein Keramik. Besonders bevorzugt besteht er aus wenigstens einem Metall und/oder Keramik, vorzugsweise ein keramisches Sintermaterial. Dadurch kann sichergestellt werden, dass das verwendete Material auch bei den eventuell auftretenden vergleichsweise hohen Temperaturen stabil bleibt. Bei der Verwendung von Metall handelt es sich üblicherweise um feinmaschige Drahtnetze. Hier sind viele Maschenformen denkbar, insbesondere Quadratmaschen, aber auch Rhombusmaschen oder Lochmaschen sowie Kombinationen dieser Maschenformen.

Weiterhin hat es sich als günstig herausgestellt, wenn die Elektrode wenigstens teilweise von einer Düse umgeben ist, wobei die Längsachse der Elektrode besonders günstiger Weise mit der Rotationsachse der Düse zusammenfällt, so dass die Düse rotationssymmetrisch um die Elektrode herum angeordnet ist. Wie es ihrem Charakter entspricht, verjüngt sich die Düse in einem Teilbereich der Elektrode, vorzugsweise zur Spitze in der Elektrode, so dass es hier zu einer Einschnürung der Inertgasströmung und damit ein weiteren Anstieg der Strömungsgeschwindigkeit kommt, was den Kühleffekt ebenso wie die Fokussierung des Schutzgases auf das Plasma weiter verbessert.

Als günstig für die Erfindung hat es sich weiterhin herausgestellt, einen weiteren Eintritt des Inertgases in die Funkenkammer vorzusehen. Dadurch kann auch das Fenster geschützt werden.

Vorzugsweise erstreckt sich die Elektrode von ihrer Befestigung über den erfindungsgemäßen siebartigen Einsatz und die Düse bis hin in einen Bereich, an den wenigstens ein Fenster angrenzt. In diesem Bereich mündet auch der weitere Eintritt des Inertgases, wobei dieser vorzugsweise so angeordnet ist, dass er zwischen der direkten Verbindung von Elektrode und Fenster liegt. Dadurch kann eine kleine Menge des Schutzgases den Hohlraum zwischen Fenster und Plasma spülen und so in der ganzen Funkenkammer die Atmosphäre stabilisieren. Gleichzeitig wird mit dieser zweiten Inertgasströmung das Fenster frei von eventuell in der Abfunkung entstehendem Kondensat gehalten. Dies ist wichtig, da andernfalls das Kondensat die Messergebnisse verfälschen würde.

Bevorzugt besteht das Fenster aus Magnesiumfluorid (MgF₂) oder Quarz, da diese Materialien durchlässig für Licht mit einer Wellenlänge < 220 nm sind.

Besonders begünstigt ist, wenn der weitere Einlass für das Inertgas so angeordnet ist, dass die aus ihm austretende Strömung um wenigstens 10° von der Längsachse der Elektrode zum Fenster hin gerichtet abweicht, vorzugsweise liegt ein Winkel zwischen 10 und 30° bezogen auf die Längsachse der Elektrode hin zum Fenster vor. Dadurch kann eine optimale Spülung des Fensters erreicht werden.

Weiterhin hat es sich als günstig herausgestellt, wenn die Elektrode durch eine Elektrodenspannzange befestigt ist. Die Elektrode kann so einfach gewechselt werden.

In einer günstigen Ausgestaltungsform besteht die Elektrodenspannzange aus Messing, welches eine günstige Fertigung ermöglicht.

Die Elektrode selbst fungiert während der Funkenerzeugung als Anode und ist daher in einer günstigen Ausgestaltungsform aus Wolfram oder Graphit, wodurch zum einen der Vorteil eines hohen Schmelzpunktes und zum anderen eine hohe Härte (gute mechanische Reinigungsmöglichkeit) gewährleistet ist.

Weiterhin sieht eine andere bevorzugte Ausgestaltungsform vor, dass die Elektrodenspannzange in einer Hülse aus einem ersten Isolationsmaterial angeordnet ist. In einer alternativen oder ergänzenden Ausführungsform ist die Hülse aus einem zweiten Isolationsmaterial gefertigt.

Besonders günstig ist es, wenn das erste und das zweite Isolationsmaterial identisch ist und/oder wenigstens eines der beiden Isolationsmaterialien Polytetrafluorethylen (PTFE) enthält.

Die Erfindung umfasst weiterhin auch ein Verfahren mit den Merkmalen des Anspruchs 11.

Das erfindungsgemäße Verwahren verwendet die oben beschriebene Vorrichtung. Dazu wird ein Inertgas über einen Gaseinlass in eine Funkenkammer eingebracht, wo es entlang der Längsachse einer länglichen Elektrode strömt. Erfindungsgemäß wird das Inertgas durch wenigstens ein siebartiges Element geführt, bevor und/oder während es die Elektrode umströmt.

Vorzugsweise handelt es sich bei dem Inertgas um ein Gas, welches zu wenigstens 99 Vol.-% bevorzugt 99,9 Vol.-%, besonders bevorzugt 99,999 Vol.-% Argon enthält. Die Verwendung von Argon als Entladungsatmosphäre bietet gegenüber Luft oder ähnlichen Gasen den Vorteil, dass zum einen Oxidationsprozesse unterbunden werden und zum anderen eine Messung von Elementlinien < 190 nm möglich ist, da deren Strahlung anderenfalls in Luft absorbiert würde.

Durch die Verwendung der Erfindung kann der Argongehalt soweit abgesenkt werden, dass der Argonverbrauch die Nutzung von Argon als Schutzgas auch bei kleinen mobilen Geräten möglich macht, da keine großen Gasvolumina mehr zur Verfügung gestellt werden müssen.

Weitere Merkmale, Vorteile und Anwendungsmöglichkeiten der Erfindung ergeben sich auch aus der nachfolgenden Beschreibung der Zeichnungen. Dabei wird die Erfindung in den angehängten Ansprüchen beschrieben.

Es zeigt:

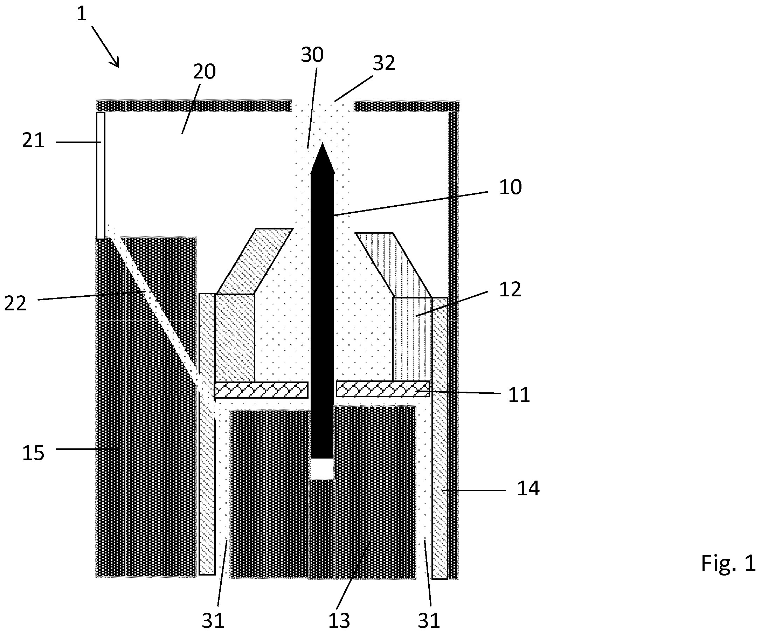

- Fig. 1: den Aufbau einer erfindungsgemäßen Funkenkammer.

Die Funkenkammer 1 weist in ihrem Inneren eine Elektrodenspannzange 13 auf, welche vorzugsweise aus Messing gefertigt ist. In dieser Elektrodenspannzange 13 steckt die Elektrode 10, auf welche in einer nicht dargestellten Weise eine Spannung aufgebracht werden kann, so dass diese Elektrode 10 als Anode fungiert.

Weiterhin findet sich in der Funkenkammer 1 eine Düse 12, welche rotationssymmetrisch ausgestaltet ist. Die Rotationsachse der Düse 12 fällt mit der Längsachse der länglichen Elektrode 10 zusammen. Elektrodenspannzange 13 und Düse 12 sind wenigstens teilweise von einem Isolationsmaterial 5 umgeben. Auch die Düse 12 ist vorzugsweise aus einem Isolationsmaterial gefertigt. Beispielsweise kann als Isolationsmaterial Polytetrafluorethylen zur Anwendung kommen.

Die Elektrode 10 mündet in einen Bereich 20, der an ein Fenster 21 angrenzt, welches vorzugsweise aus Magnesiumfluorid gefertigt ist. In einer günstigen Ausgestaltungsform steht das Fenster 21 senkrecht zur Elektrodenlängsachse. Im Betrieb wird ein Funke von der Elektrode 10 im Wesentlichen in Richtung der Längsachse auf einen nicht dargestellten Probenkörper überschlagen, so dass dieser teilweise verdampft und ein Plasma entsteht. Photosensitive Sensoren wie Photomultiplier, CMOS und/oder CCD Sensoren können durch das Fenster 21 hindurch emittierte Strahlung quantitativ und qualitativ messen, so dass die Zusammensetzung der Probe bestimmt werden kann.

Die Funkenkammer 1 weist überdies eine Gaseintrittsöffnung 31 auf. Durch diese strömt Inertgas an der Elektrodenspannzange 13 vorbei und wird durch einen siebartigen Einsatz 11 geführt. Dieser siebartige Einsatz 11 besteht aus Metall oder einem keramischen Sintermaterial und weist eine günstiger Weise eine netzförmige Struktur auf. So bildet sich eine laminare Strömung des Inertgases 30 aus, welche die Düse 12 rotationssymmetrisch um die Längsachse der Elektrode 10 führt. Dadurch wird die Elektrode 10 gleichermaßen gekühlt als auch das entstehende Plasma geschützt. Der Inertgasstrom 30 kann anschließend über den Gasaustritt 2 entweichen.

Über einen weiteren Inertgaseinlass 22, der bevorzugt als Bohrung durch das Inertmaterial 15 ausgeführt ist, die eine Verbindung zu dem Inertgaseinlass 31 herstellt, wird Inertgas abgezweigt und direkt auf das Fenster 21 geführt. So wird das Fenster 21 noch einmal zusätzlich gespült, was Kondensatbildung zuverlässig vermeiden kann, ohne dass größere Gasmengen zur Spülung der gesamten Funkenkammer verwendet werden müssen.

### Bezugszeichenliste

- 1: Funkenkammer
- 10: Elektrode
- 11: siebartiger Einsatz
- 12: Düse
- 13: Elektrodenspannzange
- 14: Isolator
- 15: Isolationsmaterial
- 20: offener Bereich
- 21: Fenster
- 22: weiterer Inertgaseinlass
- 30: Inertgasstrom
- 31: Inertgaseinlass
- 32: Inertgasauslass

## Patentansprüche

1. Optisches Emissionsspektrometer mit wenigstens einer Funkenkammer (1), welche eine in ihrem Inneren angeordnete längliche Elektrode (10) und wenigstens einem Einlass (31) für ein Inertgas aufweist, wobei der Inertgaseinlass (31) so angeordnet ist, dass das Inertgas die Elektrode (10) entlang ihrer Längsachse umströmt, **dadurch gekennzeichnet, dass** im Inertgaseintritt (31) und/oder zwischen Inertgaseintritt (31) und Elektrode (10) wenigstens ein siebartiger Einsatz (11) vorgesehen ist und/oder die Elektrode (10) im Strömungsquerschnitt der Inertgasströmung von wenigstens einem siebartigen Einsatz (11) umgeben ist.

2. Optisches Emissionsspektrometer nach Anspruch 1, **dadurch gekennzeichnet, dass** der wenigstens eine siebartige Einsatz (11) ein Metall und/oder eine Keramik enthält.

3. Optisches Emissionsspektrometer nach Anspruch 1 oder 2, **dadurch gekennzeichnet, dass** die Elektrode (10) wenigstens teilweise von einer Düse (12) umgeben ist, welche sich in wenigstens einem Teilbereich entlang der Elektrode (10) verengt, so dass es zu einer Einschnürung der Inertgasströmung kommt.

4. Optisches Emissionsspektrometer nach einem der vorhergehenden Ansprüche, **dadurch gekennzeichnet, dass** ein weiterer Inertgaseintritt (22) in die Funkenkammer (1) vorgesehen ist.

5. Optisches Emissionsspektrometer nach Anspruch 4, **dadurch gekennzeichnet, dass** sich die Elektrode (10) bis in einen Bereich (20) außerhalb der Düse (12) erstreckt, an den sich ein Fenster (21) anschließt und der Inertgaseintritt (22) des Inertgases zwischen dem Fenster (21) und der Elektrode (10) angeordnet ist.

6. Optisches Emissionsspektrometer nach Anspruch 5, **dadurch gekennzeichnet, dass** der weitere Inertgaseinlass (22) so angeordnet ist, dass die Strömung um wenigstens 10 ° von der Längsachse der Elektrode (10) zum Fenster (21) gerichtet abweicht.

7. Optisches Emissionsspektrometer nach einem der vorhergehenden Ansprüche, **dadurch gekennzeichnet, dass** die Elektrode (10) durch eine Elektrodenspannzange (13) gehalten wird.

8. Optisches Emissionsspektrometer nach einem der vorhergehenden Ansprüche, **dadurch gekennzeichnet, dass** die Elektrodenspannzange (10) in einer Hülse aus einem ersten Isolationsmaterial (14) angeordnet ist.

9. Optisches Emissionsspektrometer nach einem der vorhergehenden Ansprüche, **dadurch gekennzeichnet, dass** die Düse (12) aus einem zweiten Isolationsmaterial besteht.

10. Optisches Emissionsspektrometer nach Anspruch 8 oder 9, **dadurch gekennzeichnet, dass** das erste und das zweite Isolationsmaterial identisch ist und/oder wenigstens ein Isolationsmaterial Polytetrafluorethylen enthält.

11. Verfahren zur optischen Emissionsspektrometrie, wobei ein Inertgas über einen Gaseinlass in einer Funkenkammer entlang der Längsachse einer länglichen Elektrode strömt, **dadurch gekennzeichnet, dass** das Inertgas durch wenigstens ein siebartiges Element geführt wird, bevor und/oder während es die Elektrode umströmt.

12. Verfahren nach Anspruch 11, **dadurch gekennzeichnet, dass** das Inertgas zu wenigstens 90 Vol.-% Argon enthält.

## Claims

1. An optical emission spectrometer with at least one spark chamber (1) comprising an oblong electrode (10) being arranged inside thereof and at least one inlet (31) for an inert gas, wherein the inert gas inlet (31) is arranged such that the inert gas flows around the electrode (10) along its longitudinal axis, **characterized in that** in the inert gas entry (31) and/or between inert gas entry (31) and electrode (10) at least one sieve-like insert (11) is provided and/or the electrode (10) in the flow cross-section of the inter gas flow is surrounded by at least one sieve-like insert (11).

2. The optical emission spectrometer according to claim 1, **characterized in that** the at least one sieve-like insert (11) contains a metal and/or a ceramic.

3. The optical emission spectrometer according to claim 1 or 2, **characterized in that** the electrode (10) is at least partially surrounded by a nozzle (12) which in at least a portion along the electrode (10) tapers so that this results in a necking of the inert gas flow.

4. The optical emission spectrometer according to one of the preceding claims, **characterized in that** a further inter gas entry (22) is provided in the spark chamber (1).

5. The optical emission spectrometer according to claim 3 and 4, **characterized in that** the electrode (10) extends to a region (20) outside the nozzle (12) which is adjacent to a window (21) and that the inter gas entry (22) of the inert gas is arranged between the window (21) and the electrode (10).

6. The optical emission spectrometer according to claim 5, **characterized in that** the further inert gas inlet (22) is arranged such that the flow deviates by at least 10 ° with respect to the longitudinal axis of the electrode (10) into the direction of the window (21).

7. The optical emission spectrometer according to one of the preceding claims, **characterized in that** the electrode (10) is hold by an electrode collet chuck (13).

8. The optical emission spectrometer according to one of the preceding claims, **characterized in that** the electrode collet chuck (10) is arranged in a sheath made of a first insulating material (14).

9. The optical emission spectrometer according to one of the preceding claims, **characterized in that** the nozzle (12) consists of a second insulating material.

10. The optical emission spectrometer according to claim 8 or 9, **characterized in that** the first and the second insulating materials are identical and/or at least one insulating material contains polytetrafluoroethylene.

11. A method for optical emission spectrometry, wherein an inert gas via a gas inlet in a spark chamber flows along the longitudinal axis of an oblong electrode, **characterized in that** the inert gas is directed by at least one sieve-like element, before and/or during flowing around the electrode.

12. The method according to claim 11, **characterized in that** the inert gas contains argon in an amount of at least 90 % by volume.

## Revendications

1. Spectromètre d'émission optique avec au moins une chambre à étincelles (1), laquelle comporte une électrode longitudinale (10) disposée dans son intérieur et au moins une entrée (31) pour un gaz inerte, sachant que l'entrée de gaz inerte (31) est disposée de telle manière que le gaz inerte contourne l'électrode (10) le long de son axe longitudinal, **caractérisé en ce que** dans l'entrée de gaz inerte (31) et/ou entre l'entrée de gaz inerte (31) et l'électrode (10) au moins un élément inséré de type filtre (11) est prévu et/ou l'électrode (10) est entourée dans la section d'écoulement de l'écoulement du gaz inerte par au moins un élément inséré de type filtre (11).

2. Spectromètre d'émission optique selon la revendication 1, **caractérisé en ce qu'**au moins un élément inséré de type filtre (11) contient un métal et/ou une céramique.

3. Spectromètre d'émission optique selon la revendication 1 ou 2, **caractérisé en ce que** l'électrode (10) est entourée au moins par endroits d'une buse (12), laquelle se rétrécit dans au moins une partie de zone le long de l'électrode (10) de telle sorte que l'on parvient à un rétrécissement de l'étranglement du gaz inerte.

4. Spectromètre d'émission optique selon l'une quelconque des revendications précédentes, **caractérisé en ce qu'**une autre entrée de gaz inerte (22) est prévue dans la chambre à étincelles (1).

5. Spectromètre d'émission optique selon la revendication 4, **caractérisé en ce que** l'électrode (10) s'étend jusque dans une zone (20) en dehors de la buse (12) à laquelle se raccorde une fenêtre (21) et l'entrée de gaz inerte (22) du gaz inerte est disposée entre la fenêtre (21) et l'électrode (10).

6. Spectromètre d'émission optique selon la revendication 5, **caractérisé en ce que** l'autre entrée de gaz inerte (22) est disposée de telle manière que l'écoulement s'écarte d'au moins 10° de l'axe longitudinal de l'électrode (10) par rapport à l'orientation de la fenêtre (21).

7. Spectromètre d'émission optique selon l'une quelconque des revendications précédentes, **caractérisé en ce que** l'électrode (10) est maintenue par une pince de serrage d'électrode (13).

8. Spectromètre d'émission optique selon l'une quelconque des revendications précédentes, **caractérisé en ce que** la pince de serrage d'électrode (10) est disposée dans un manchon composé d'un premier matériau isolant (14).

9. Spectromètre d'émission optique selon l'une quelconque des revendications précédentes, **caractérisé en ce que** la buse (12) est composée d'un deuxième matériau isolant.

10. Spectromètre d'émission optique selon la revendication 8 ou 9, **caractérisé en ce que** le premier et le deuxième matériau d'isolation sont identiques et/ou contiennent au moins un matériau isolant de type polytétrafluoroéthylène.

11. Procédé de spectrométrie d'émission optique, sachant qu'un gaz inerte s'écoule par une entrée de gaz dans une chambre à étincelles le long de l'axe longitudinal d'une électrode longitudinale, **caractérisé en ce que** le gaz inerte est guidé par au moins un élément du type filtre avant et/ou pendant qu'il contourne l'électrode.

12. Procédé selon la revendication 11, **caractérisé en ce que** le gaz inerte contient au moins 90 %/vol. d'argon.
